# EUROPEAN PATENT APPLICATION

(11) **EP 1 143 689 A1**
(43) Date of publication of application: **10.10.2001**
(21) Application number: 00966502.7
(22) Date of filing: 16.10.2000
(51) Int. Cl.: H04M 1/274

(54) **TELEPHONE**

(30) Priority: 18.10.1999 JP 29502299
(71) Applicant: Matsushita Electric Industrial Co., Ltd., Kadoma-shi, Osaka 571-8501 (JP)
(72) Inventor: TATSUMI, Akinoro, Yokohama-shi, Kanagawa 233-0002 (JP)
(74) Representative: Grünecker, Kinkeldey, Stockmair & Schwanhäusser Anwaltssozietät
(86) International application number: JP0007154
(87) International publication number: WO0130054

(57) **Abstract**

Telephone set 100, provided with number information readout section 101, number information recognition section 103 and call setup section for recognition destination 104, incorporates printed telephone numbers or homepage addresses as image information, recognizes telephone numbers or homepage addresses made up of actual characters, numerals or symbols and sends out signals to the recognized telephone numbers or homepage addresses.

## Description

### Technical Field

The present invention relates to a telephone set.

### Background Art

When a user of a conventional telephone set sends out signals to a telephone number printed on a printed matter such as a magazine or registers the telephone number in the telephone set, the user enters the telephone number by confirming it with his/her own eyes.

Furthermore, when it is possible to access an Internet homepage using the conventional telephone set, the user enters the homepage address by confirming it with his/her own eyes to access the printed homepage address.

On the other hand, when the user registers the telephone number of the own telephone set in another telephone set, the user dictates the own telephone number or shows the telephone number on the display section of the own telephone set so that another person reads it. Moreover, when the user registers a telephone number already registered in the own telephone set in another telephone set or when the user sends out signals to the already registered telephone number using another telephone set, the user searches the registered telephone number and shows it on the display section and dictates it to the other person or let the other person read it.

Thus, the conventional telephone set or cellular telephone set requires human intervention in all cases where the user incorporates a printed telephone number or a homepage address or registers a registered telephone number in another telephone set or sends out signals to a registered telephone number.

However, since the conventional telephone set (including a cellular telephone set) requires human intervention in all cases where the user registers a telephone number or homepage address printed in a magazine, etc. or sends/receives a registered telephone number or homepage address to/from another telephone set, there are problems that these operations take time and trouble or the information involving human intervention may lack the accuracy.

### Disclosure of Invention

It is an object of the present invention to provide a telephone set for when a telephone number or homepage address printed in a magazine, etc. is sent or registered or when a registered telephone number or homepage address is sent/received to/from another telephone set, capable of carrying out these operations accurately and in a short time.

A theme of the present invention is to read a telephone number or homepage address printed in a magazine, etc. as image information using a telephone set ( including a cellular telephone set) , recognize the actual telephone number or homepage address from the image information, send out signals to the recognized telephone number or homepage address or transfer the own telephone number or registered telephone number to another telephone set.

### Brief Description of Drawings

FIG.1 is a block diagram showing an outlined configuration of a telephone set according to Embodiment 1 of the present invention;
FIG.2 illustrates an example of usage of the telephone set according to Embodiment 1 of the present invention;
FIG.3 is a block diagram showing an outlined configuration of a telephone set according to Embodiment 2 of the present invention;
FIG.4 is a block diagram showing an outlined configuration of a telephone set according to Embodiment 3 of the present invention;
FIG.5 is a block diagram showing an outlined configuration of a telephone set according to Embodiment 4 of the present invention;
FIG.6 is a block diagram showing an outlined configuration of a telephone set according to Embodiment 5 of the present invention;
FIG.7 is a block diagram showing an outlined configuration of a telephone set according to Embodiment 6 of the present invention;
FIG.8 is a block diagram showing an outlined configuration of a number information transmission unit according to Embodiment 7 of the present invention;
FIG.9 illustrates an example of usage of the number information transmission unit according to Embodiment 7 of the present invention; and
FIG.10 is a block diagram showing an outlined configuration of a number information transmission unit according to Embodiment 8 of the present invention.

### Best Mode for Carrying out the Invention

With reference now to the attached drawings, embodiments of the present invention will be explained in detail below.

### (Embodiment 1)

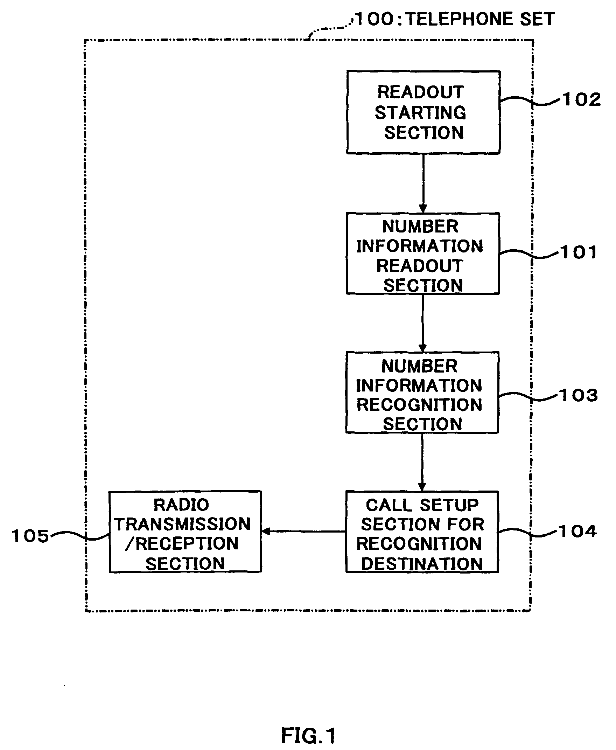

FIG.1 is a block diagram showing an outlined configuration of a telephone set according to Embodiment 1 of the present invention.

Telephone set 100 of this Embodiment 1 is constructed of number information readout section 101 provided with an optical reading sensor (not shown) such as a sensor, readout starting section 102 that instructs this number information readout section 101 to start reading, number information recognition section 103 that recognizes a telephone number or homepage address from the image information read by number information readout section 101, call setup section for recognition destination 104 that sends out signals to the telephone number or homepage address recognized by this number information recognition section 103 and radio transmission/reception section 105 that transmits/receives a radio signal for communications.

The optical reading sensor of number information readout section 101 is incorporated, for example, in the lower section of the main body of telephone set 100 and detects light through a hole (not shown,hereinafter referred to as "sensor hole") perforated in the lower section of the main body of telephone set 100. When readout starting section 102 detects that a reading start key (not shown) provided on the operation panel of telephone set 100 has been depressed, it instructs number information readout section 101 to start reading. In the case where the information recognized by number information recognition section 103 is a telephone number, call setup section for recognition destination 104 sends out signals to this telephone number and in the case where the recognized information is a homepage address, accesses this homepage address. In this case, when call setup section for recognition destination 104 accesses the homepage address, it sends out signals to the telephone number of an access point of a registered provider or the telephone number of an access point dialed and accesses the target homepage address after a connection is established.

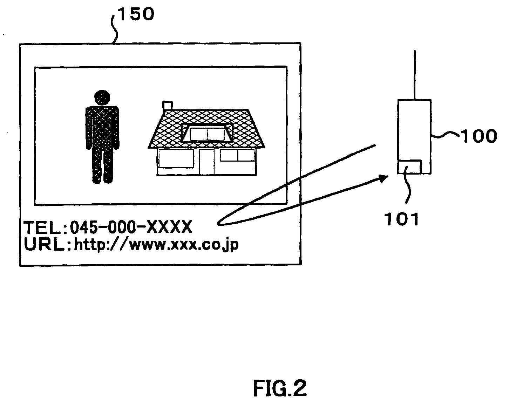

Here, FIG.2 illustrates how telephone set 100 reads a telephone number (045-○○○-×××) and homepage address (http://www.xxx.co.jp) printed on poster 150. These telephone number and homepage address are read by number information readout section 101 as image information.

Thus, when telephone set 100 of this Embodiment 1 sends out signals to a telephone number printed in a magazine, etc., operating the reading start key, then tapping the sensor hole of telephone set 100 on a telephone number to be read and moving telephone set 100 in such a way as to trace the telephone number will allow the printed telephone number to be read as an image and an actual telephone number made up of numerals to be recognized from the image information and signals to be sent out thereto.

When a printed homepage address is accessed, the reading start key is operated in like manner, and then telephone set 100 is moved in such a way as to trace the homepage. This allows the printed homepage address to be read as image information and the actual homepage address made up of characters, numerals and symbols to be recognized. Then, signals are sent out to the telephone number of an access point of a registered provider or to the telephone number of an access point dialed at this point in time. Then, after a connection with the provider is established, the recognized homepage address is accessed.

Thus, by only tracing a telephone number or homepage address printed in a magazine, etc. with the reading section of telephone set 100, this telephone set incorporates the telephone number or homepage address as image information, recognizes the telephone number or homepage address and transmits or accesses them, making it possible to perform these operations in transmitting or accessing the printed telephone number or homepage address accurately and in a short time.

By the way, in addition to the above optical reading sensor, a pyroelectric sensor can also be used as the sensor to detect people.

### (Embodiment 2)

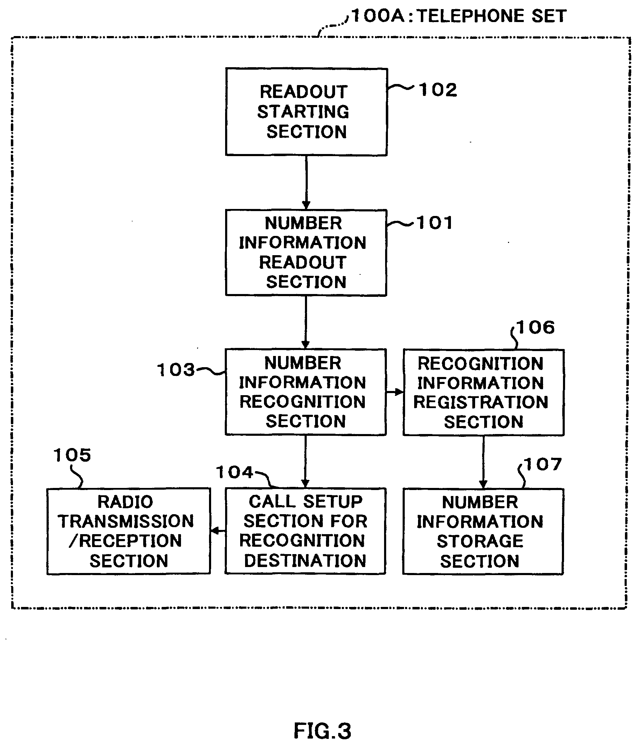

FIG.3 is a block diagram showing an outlined configuration of a telephone set according to Embodiment 2 of the present invention. The parts in this figure common to those in aforementioned FIG.1 are assigned the same reference numerals and the explanations thereof are omitted.

In addition to a configuration similar to that of telephone set 100 of aforementioned Embodiment 1, telephone set 100A of this Embodiment 2 further comprises recognition information registration section 106 and number information storage section 107. Recognition information registration section 106 stores telephone numbers and homepage addresses recognized by number information recognition section 103 in number information storage section 107.

Thus, telephone set 100A of this Embodiment 2 can register recognized telephone numbers or homepage addresses easily and accurately. By the way, as number information storage section 107, a built-in memory for registration of telephone numbers generally provided for a telephone set can also be used or a memory independent of this built-in memory can also be used.

Furthermore, with number information storage section 107 storing telephone numbers and homepage addresses, it is possible to make a telephone call or access a homepage at any time.

### (Embodiment 3)

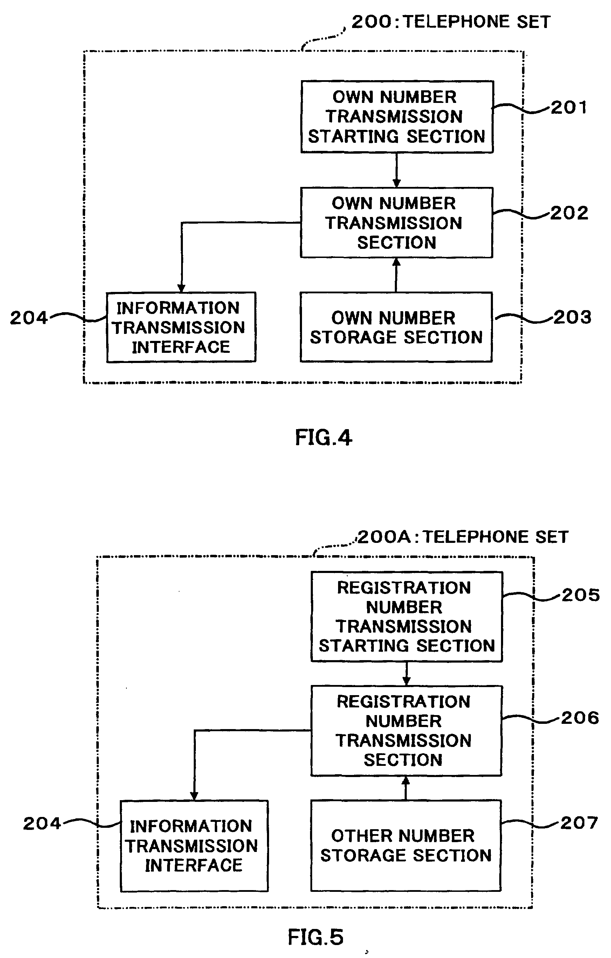

FIG.4 is a block diagram showing an outlined configuration of a telephone set according to Embodiment 3 of the present invention.

In addition to a configuration similar to those of telephone sets 100 and 100A of aforementioned Embodiment 1 and Embodiment 2, telephone set 200 of this Embodiment 3 further comprises own number transmission starting section 201, own number transmission section 202, own number storage section 203 and information transmission interface 204.

When own number transmission starting section 201 detects that an own number transmission key (not shown) provided on the operation panel of telephone set 200 is depressed, it instructs own number transmission section 202 to start to transmit the own telephone number. Own number storage section 203 stores the telephone number assigned to telephone set 200, that is, own telephone number.

When own number transmission starting section 201 supplies an own number transmission start signal, own number transmission section 202 reads the own telephone number stored in own number storage section 203 and supplies the telephone number to information transmission interface 204. Information transmission interface 204 transmits information to the outside using infrared rays and transmits the own telephone number supplied from own number transmission section 202 to the outside. If it is, for example, a telephone set that receives the own telephone number transmitted, it goes without saying that the telephone set must have the same information transmission interface 204 of telephone set 200 of this Embodiment 3. On the other hand, if it is an information device such as personal computer or PDA (personal digital assistance) that receives the own telephone number, it naturally needs to have an information transmission interface similar to information transmission interface 204.

Thus, since telephone set 200 of this Embodiment 3 can send the own telephone number, it is possible to easily and accurately register the own telephone number in other telephone sets. Registration in a directory file of an information device such as personal computer or PDA can also be performed easily and accurately.

By the way, if telephone set 200 is, for example, a PHS (personal handy phone system), own number transmission section 202 above sends the own telephone number using a transceiver function of the PHS machine. (Embodiment 4)

FIG.5 is a block diagram showing an outlined configuration of a telephone set according to Embodiment 4 of the present invention.

In addition to a configuration similar to that of telephone set 200 of Embodiment 3 above, telephone set 200A of this Embodiment 4 comprises registration number transmission starting section 205, registration number transmission section 206 and other number storage section 207. By the way, registration number transmission starting section 205, registration number transmission section 206 and other number storage section 207 can also be provided for telephone set 100 of Embodiment 1 or telephone set 100A of Embodiment 2.

Other number storage section 207 stores telephone numbers other than the own telephone number, that is, telephone numbers of other telephone sets. When supplied with a start signal from registration number transmission starting section 205, registration number transmission section 206 reads telephone numbers of other telephone sets stored in other number storage section 207 and supplies them to information transmission interface 204. Information transmission interface 204 sends telephone numbers supplied from registration number transmission section 206 to the outside.

Thus, since telephone set 200A of this Embodiment 4 can send registered telephone numbers to other telephone sets, it can register the registered telephone numbers in other telephone sets easily and accurately. Registration in a directory file, etc. of an information device such as personal computer and PDA can also be performed easily and accurately.

By the way, if telephone set 200A is, for example, a PHS, registration number transmission section 206 above sends other telephone numbers using a transceiver function of the PHS machine.

### (Embodiment 5)

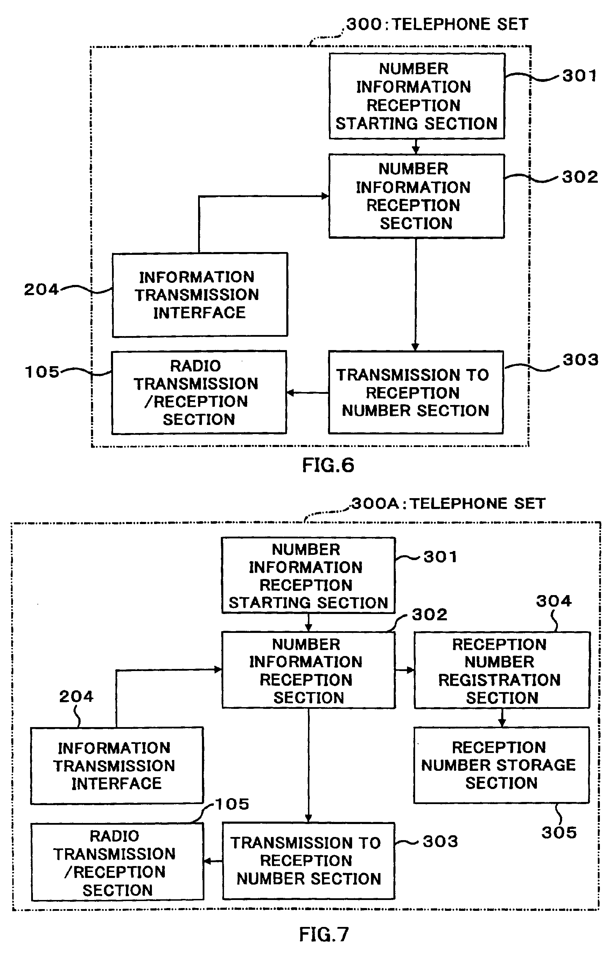

FIG.6 is a block diagram showing an outlined configuration of a telephone set according to Embodiment 5 of the present invention.

In addition to a configuration similar to that of telephone set 200 of Embodiment 3 or telephone set 200A of Embodiment 4 above, telephone set 300 of this Embodiment 5 comprises number information reception starting section 301, number information reception section 302 and transmission to reception number section 303. By the way, number information reception starting section 301, number information reception section 302 and transmission to reception number section 303 can also be provided in telephone set 100 of Embodiment 1 or telephone set 100A of Embodiment 2 above.

Upon detection that a reception start key ( not shown ) is depressed, number information reception starting section 301 supplies a reception start signal to number information reception section 302. When the reception start signal is supplied from number information reception starting section 301, number information reception section 302 receives information from an external device such as another telephone set and supplies it to transmission to reception number section 303. Transmission to reception number section 303 sends out signals in response to the information supplied from number information reception section 302. In this case, if the relevant information is a telephone number, transmission to reception number section 303 sends out signals to the telephone number. Furthermore, if the relevant information is a homepage address, transmission to reception number section 303 sends out signals to the telephone number of an access point of a registered provider or the dialed telephone number of an access point and accesses the target homepage address after a connection is established.

Thus, since telephone set 300 of this Embodiment 5 receives information sent from an external device such as another telephone set and then transmits, telephone set 300 can enter telephone numbers of other telephone sets or homepage addresses in the own telephone set more easily and more accurately than manually entering them.

By the way, if telephone set 300 is, for example, a PHS, number information reception section 302 above receives telephone numbers or homepage addresses sent from an external device such as another telephone set using a transceiver function of the PHS machine.

### (Embodiment 6)

FIG.7 is a block diagram showing an outlined configuration of a telephone set according to Embodiment 6 of the present invention.

In addition to a configuration similar to that of telephone set 300 of Embodiment 5 above, telephone set 300A of this Embodiment 6 comprises reception number registration section 304 and reception number storage section 305.

Reception number registration section 304 stores telephone numbers of other telephone sets and names of other parties received by number information reception section 302 in reception number storage section 305.

Thus, telephone set 300A of this Embodiment 6 can register the received telephone numbers of other telephone sets and names of other parties easily and accurately.

### (Embodiment 7)

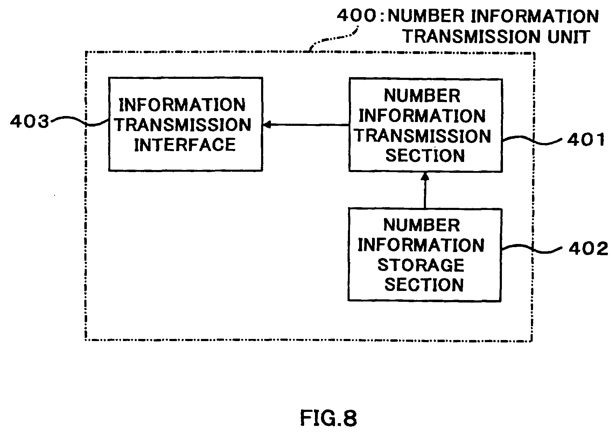

FIG.8 is a block diagram showing an outlined configuration of a number information transmission unit according to Embodiment 7 of the present invention.

Number information transmission unit 400 of this Embodiment 7 is constructed of number information transmission section 401, number information storage section 402 and information transmission interface 403.

Number information storage section 402 stores telephone numbers of telephone sets, names of other parties or homepage addresses. Number information transmission section 401 sends out the telephone numbers, names of other parties or homepage addresses stored in number information storage section 402 using information transmission interface 403. Information transmission interface 403 sends out information using infrared rays as in the case of information transmission interface 204 described above.

By installing number information transmission unit 400 of this Embodiment 7 on the street together with a poster or signboard, etc. or together with danglers in the train, it is possible to send registered telephone numbers and names of other parties (advertisers in this case) or homepage addresses to telephone sets 300 and 300A of Embodiment 5 and Embodiment 6 described above, respectively. That is, it is possible to transfer/register registered telephone numbers and names of other parties or homepage addresses to nearby telephone sets easily and accurately.

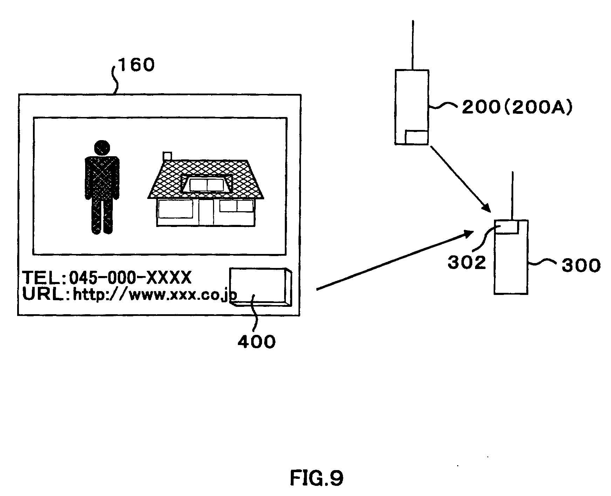

Here, FIG.9 illustrates how telephone set 300 of Embodiment 5 reads a telephone number (045-○○○-×× X) and homepage address (http://www.xxx.co.jp) from number information transmission unit 400 provided on poster 160.

Telephone number and homepage address sent from number information transmission unit 400 are received by number information reception section 302 of telephone set 300. By the way, telephone set 300 can receive not only the own telephone number sent from telephone set 200 that includes own number transmission section 202 that sends the own telephone number but also registration telephone numbers sent from telephone set 200A that includes registration number transmission section 206 that transmits registration numbers.

### (Embodiment 8)

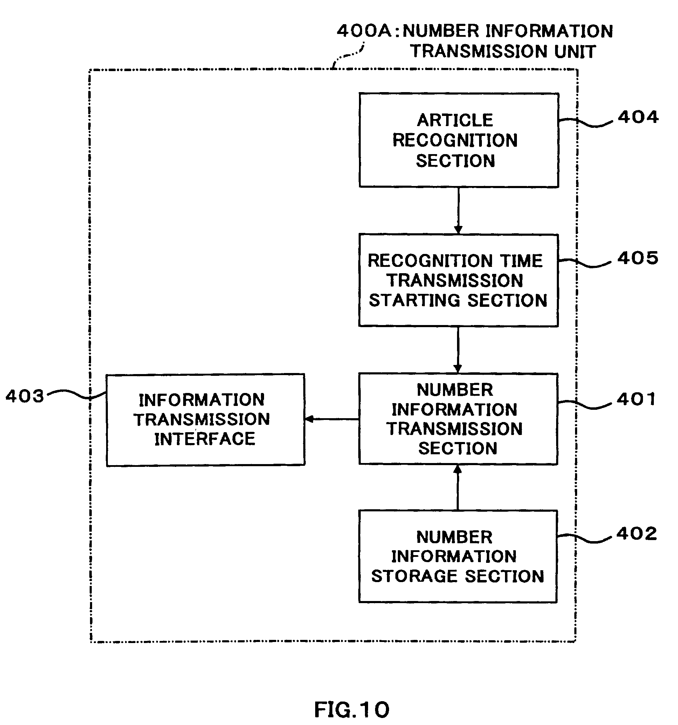

FIG.10 is a block diagram showing an outlined configuration of a number information transmission unit according to Embodiment 8 of the present invention. The parts in this figure common to those in aforementioned FIG.8 are assigned the same reference numerals and the explanations thereof are omitted.

In addition to a configuration similar to that of telephone set 400 of Embodiment 7 described above, number information transmission unit 400A of this Embodiment 8 comprises article recognition section 404 and recognition time transmission starting section 405.

Article recognition section 404 is provided with a sensor (not shown) and recognizes the presence of an article or person based on image information from this sensor. Recognition time transmission starting section 405 starts up when an article or person is recognized by article recognition section 404, reads telephone numbers and the names of other parties or homepage addresses stored in number information storage section 402 and supplies them to information transmission interface 403. In this case, recognition time transmission starting section 405 operates for a certain time after it starts up.

By installing number information transmission unit 400A of this Embodiment 8 on the street together with a poster or signboard, etc. or together with danglers in the train as in the case of number information transmission unit 400 of this Embodiment 7 above, it is possible to transfer registered telephone numbers and names of other parties (advertisers in this case) or homepage addresses to telephone set 300 of Embodiment 5 or telephone set 300A of Embodiment 6 above. In this case, since the registered telephone numbers and names of other parties or homepage addresses are transmitted only for a certain time after a person or article is recognized by article recognition section 404, it is possible to minimize power consumption.

By the way, Embodiments 1 to 8 above handle telephone numbers and homepages as number information, but these embodiments can also be configured to handle other number information.

The telephone set of the present invention is constructed of an information reading section that reads image information on a printed matter, a number information recognition section that recognizes a telephone number or homepage address from the image information read by this information reading section, a call setup section for recognition destination that accesses the telephone number or homepage address recognized by this number information recognition section, a number storage section that stores telephone numbers or homepage addresses and a recognition information registration section that stores the telephone numbers or homepage addresses recognized by the number information recognition section in the number storage section.

According to this configuration, image information of telephone numbers or homepage addresses printed in a magazine, etc. are read, actual telephone numbers and homepage addresses are recognized and sent, and there is no need to manually enter those telephone numbers or homepage addresses in the telephone set, making it possible to perform these operations accurately and in a short time.

It is also possible to register telephone numbers or homepage addresses printed in a magazine, etc. in the own telephone set easily and accurately.

The telephone set of the present invention described above is constructed of an information transmission section to transmit information and an own number transmission section that transmits the own telephone number to the outside using the information transmission section.

According to this configuration, it is possible to transfer the own telephone number of the telephone set to other telephone sets, making it possible to register the own telephone number in other telephone sets easily and accurately.

Furthermore, since it is possible to transfer the own telephone number to an information device such as personal computer or PDA (personal digital assistance), entries in a directory file, etc. of these information devices can also be performed easily and accurately.

Furthermore, the telephone set of the present invention described above is constructed of a registration number transmission section that sends telephone numbers other than the own telephone number or homepage addresses stored in the number storage section using the information transmission section to the outside.

This configuration allows telephone numbers or homepage addresses registered in the telephone set to be transferred to other telephone sets, making it possible to register registered telephone numbers or homepage addresses in other telephone sets easily and accurately.

Furthermore, since it is possible to transfer telephone numbers and homepage addresses to an information device such as personal computer or PDA in addition to telephone sets, entries in a directory file, etc. of these information devices can also be performed easily and accurately.

Furthermore, the telephone set of the present invention described above is constructed of a number information reception section that receives telephone numbers or homepage addresses from the outside using the information transmission section and a reception number registration section that stores the telephone numbers or homepage addresses from the outside received by this number information reception section.

According to this configuration, it is possible to register telephone numbers of other telephone sets, telephone numbers registered in those telephone sets or telephone numbers registered in an information device such as personal computer and PDA having a directory file in the own telephone set easily and accurately.

Furthermore, the telephone set of the present invention described above further comprises a transmission to reception number section that sends out signals to a telephone number or accesses a homepage address received by the number information reception section.

This configuration allows signals to be sent out to a telephone number of another telephone set or a telephone number registered in the telephone set or homepage address easily and accurately.

Furthermore, the information transmission section of the telephone set of the present invention described above transmits information to the outside using electromagnetic waves or light containing infrared rays .

Furthermore, the number information transmission unit of the present invention comprises an information transmission section to transmit information, a number storage section to store telephone numbers or homepage addresses and a number information transmission section that transmits telephone numbers or homepage addresses stored in the number storage section to the outside using the information transmission section.

This configuration allows registered telephone numbers or homepage addresses to be transferred to a telephone set. Especially, installing this number information transmission unit directly or adjacent to advertising matters such as poster, flyer, signboard so that registered telephone numbers or homepage addresses are transferred to nearby telephone sets. That is, it is possible to transfer/register telephone numbers or homepage addresses to nearby telephone sets easily and accurately.

Furthermore, the number information transmission unit of the present invention described above further comprises an article recognition section that recognizes the presence of an article and a recognition time transmission starting section that controls the number information transmission section so that telephone numbers or homepage addresses stored in the number storage section for a certain time after an article is recognized by this article recognition section are sent out.

This configuration allows telephone numbers or homepage addresses to be transferred only when a person or article is recognized.

Furthermore, the article recognition section of the number information transmission unit of the present invention described above further comprises a sensor and recognizes the presence of a person based on information from this sensor.

As the sensor, an optical reading sensor such as CCD or pyroelectric sensor is recommendable.

Furthermore, the information transmission section of the number information transmission unit of the present invention described above transmits information to the outside using electromagnetic waves or light containing infrared rays.

Furthermore, the storage information transmission unit of the present invention described above is provided on advertising matters such as poster, flyer, and signboard.

As described above, the present invention allows signals to be sent out to telephone numbers or homepage addresses printed in a magazine, etc. or allows these telephone numbers or homepage addresses to be registered without human intervention. The present invention also allows numbers registered in a telephone set to be sent out easily, making it possible to smoothly transfer number information. Furthermore, using the number information transmission unit for advertisement on the street or danglers in the train makes it possible to advertise telephone numbers or homepage addresses to access the relevant article more widely and more accurately.

This application is based on the Japanese Patent Application No.HEI 11-295022 filed on October 18, 1999, entire content of which is expressly incorporated by reference herein.

### Industrial Applicability

The present invention is applicable to a telephone set capable of sending out signals to telephone numbers or homepage addresses or registering these telephone numbers or homepage addresses.

## Claims

1. A telephone set comprising:
an information reading means for reading image information;
number information recognizing means for recognizing telephone numbers or homepage addresses from the image information read by said information reading means;
recognition destination transmitting means for sending out signals to the telephone numbers recognized by said number information recognizing means or accessing homepage addresses;
number storing means for storing telephone numbers or homepage addresses; and
recognition information registering means for storing the telephone numbers or homepage addresses recognized by said number information recognizing means in said number storing means.

2. The telephone set according to claim 1, further comprising:
information transmitting means for transmitting information; and
own number transmitting means for transmitting the own telephone number to the outside using said information transmitting means.

3. The telephone set according to claim 1, further comprising registration number transmitting means for transmitting telephone numbers other than the own telephone number or homepage addresses stored in the number storing means to the outside using the information transmitting means.

4. The telephone set according to claim 2, further comprising:
number information receiving means for receiving telephone numbers or homepage addresses from the outside using the information transmitting means; and
reception number registering means for storing telephone numbers or homepage addresses received from the outside by said number information receiving means in the number storing means.

5. The telephone set according to claim 4, further comprising transmitting to reception number means for sending out signals to telephone numbers or accessing homepage addresses received by the number information receiving means.

6. The telephone set according to claim 2, wherein the information transmitting means transmits information to the outside using electromagnetic waves or light containing infrared rays.

7. A number information transmission unit comprising:
information transmitting means for transmitting information;
number storing means for storing telephone numbers or homepage addresses; and
number information transmitting means for transmitting telephone numbers or homepage addresses stored in said number storing means to the outside using said information transmitting means.

8. The number information transmission unit according to claim 7, further comprising:
article recognizing means for recognizing the presence of an article; and
recognition time transmission starting means for controlling the number information transmitting means so that the number information transmitting means transmits telephone numbers or homepage addresses stored in the number storing means for a certain time after an article is recognized by said article recognizing means.

9. The number information transmission unit according to claim 8, wherein the article recognizing means comprises a sensor and recognizes the presence of a person based on information from this sensor.

10. The number information transmission unit according to claim 7, wherein the information transmitting means transmits information to the outside using electromagnetic waves or light containing infrared rays.

11. The number information transmission unit according to claim 7 provided on advertising matters such as poster, flyer and signboard.
